(19) Europäisches Patentamt
European Patent Office
Office européen des brevets

(11) EP 3 255 515 B1

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(51) Int Cl.:
*G05B 19/401* (2006.01)     *A61C 5/77* (2017.01)

(21) Anmeldenummer: **17170819.1**

(22) Anmeldetag: **12.05.2017**

(54) **VERFAHREN ZUM BETREIBEN EINER CNC-MASCHINE**

METHOD FOR OPERATING A CNC MACHINE

PROCÉDÉ DE FONCTIONNEMENT D'UNE MACHINE À COMMANDE NUMÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2016 AT 505292016**

(43) Veröffentlichungstag der Anmeldung:
**13.12.2017 Patentblatt 2017/50**

(73) Patentinhaber: **STEGER, Heinrich**
**39031 Bruneck (IT)**

(72) Erfinder: **STEGER, Heinrich**
**39031 Bruneck (IT)**

(74) Vertreter: **Torggler & Hofinger Patentanwälte**
**Postfach 85**
**6010 Innsbruck (AT)**

(56) Entgegenhaltungen:
WO-A1-02/35585          US-A1- 2006 253 220
US-A1- 2012 213 602     US-A1- 2015 283 654

EP 3 255 515 B1

**Beschreibung**

Die Erfindung betrifft ein Verfahren zum Betreiben einer CNC-Maschine und zum Bearbeiten eines dentalen Werkstücks mit den Merkmalen des Oberbegriffs von Anspruch. Zudem betrifft die Erfindung eine CNC-Maschine zum Bearbeiten eines dentalen Werkstücks mit den Merkmalen des Oberbegriffs von Anspruch 6.

Ein Verfahren zum Vermessen von Handhabungsvorrichtungen, insbesondere Werkzeugmaschinen, geht aus der WO 00/73028 A1 hervor, wobei ein Messsystem über einen Messkörper kalibriert wird.

In der DE 10 2008 06 927 A1 geht es um eine Anordnung zur Korrektur einer Positionssensoreinheit und um ein korrespondierendes Positionierungssystem sowie um eine Verfahren zur Korrektur des Positionierungssystems. Insbesondere wird eine fehlerbehaftete Positionsinformation eines empfangenen Messsignals durch Einarbeiten eines Korrekturwerts korrigiert.

Die Veröffentlichung DE 60 2005 003 012 T2 zeigt ein gattungsfremdes Verfahren für die automatische Kalibrierung wenigstens eines Werkzeugs in einer für die Herstellung von Brillenlinsen verwendeten Drehmaschine. Dabei wird zuerst ein Prüfstück geschnitten, dann das Prüfstück vermessen, anschließend die Messdaten in Bezug auf Abweichungen analysiert und abschließend die Maschine zur Kompensation der Fehler automatisch gesteuert.

Aus der Veröffentlichung WO 02/35585A1 gehen eine Vorrichtung und ein Verfahren zum Schneiden von Stücken aus einer Halbleiterplatte hervor. Dazu wird ein System zum Flüssigkeitsstrahlschneiden verwendet.

Die Veröffentlichung US 2017/0283654 A1 beschreibt ein Verfahren zum Reparieren von Flugzeugen oder Gasturbinenkomponenten. Dabei wird unter anderem ein Roboter zum Schneiden und Fräsen eingesetzt.

Auch die US 2012/0213602 A1 zeigt einen Stand der Technik, wobei ein Verfahren zum Vermessen und zum Prüfen eines zu einer Zahnradpaarung gehörigen Werkstückes beschrieben wird. Unter Zahnradpaaren ist die Kombination beliebiger Zahnräder mit ihren passenden Gegenrädern zu verstehen. Darunter fallen beispielsweise Schnecke und Schneckenrad oder auch zwei oder mehrere zueinander passende Zylinder- bzw. Stirnräder. Die Laufeigenschaften einer Verzahnung werden durch Form und Maßabweichungen der am Eingriff beteiligten Partner bestimmt. Zur Beurteilung des Übertragungsverhaltens werden deshalb am gefertigten Zahnrad Messungen durchgeführt, mit denen einzelne Arten von Abweichungen ermittelt werden können.

Die US 2006/0253220 A1 zeigt ein Verfahren zur automatischen Kalibrierung eines Werkzeugs in einer Einzelpunkt-Drehmaschine zur Herstellung von Brillengläsern.

Von Zahntechnikern werden für die Herstellung und Bearbeitung von dentalen Werkstücken (z. B. Zahnersatz, Implantate, Abutments, Dentalmodelle, usw.) bereits seit vielen Jahren CNC-Maschinen eingesetzt. CNC steht dabei für Computerized Numerical Control. Derartige Maschinen können in einem Bearbeitungsmodus betrieben werden, in welchem ein eingespanntes dentales Werkstück auf Basis einer rechnergestützten Fertigung (CAM - computer-aided manufacturing) bearbeitet wird. Dies erfolgt meist in Form einer spanabhebenden Bearbeitung durch ein in der Bearbeitungsvorrichtung eingespanntes Bearbeitungswerkzeug in Form eines Fräsers, Bohrers, Schleifers oder Ähnlichem. In den letzten Jahren haben sich auch generative Verfahren immer mehr etabliert.

Ein Beispiel für eine gattungsbildende CNC-Maschine geht aus der DE 20 2015 004 771 U1 hervor, welche im Speziellen eine Positionserfassungseinrichtung zum Erfassen einer Position eines Werkzeugs aufweist.

Der Genauigkeit bei der Herstellung solcher CNC-Maschinen sind gewisse Grenzen gesetzt. Unter anderem müssen Spiele vor allem zwischen den sich zueinander bewegenden Teilen vorhanden sein, damit diese montiert werden können. Dadurch kann es vorkommen, dass Maschinenachsen nicht in einem idealen 90°-Winkel zueinander ausgerichtet sind. Auch Toleranzen der Maschinenteile spielen bei der Genauigkeit der schlussendlich zu fertigenden Teile eine Rolle. Unter diesen kaum zu verhindernden Schwankungen bzw. Ungenauigkeiten leidet auch die Qualität des zu bearbeitenden dentalen Werkstücks.

Die Aufgabe der vorliegenden Erfindung besteht daher darin, ein gegenüber dem Stand der Technik verbessertes Verfahren bzw. eine verbesserte CNC-Maschine zu schaffen. Insbesondere sollen die angeführten Nachteile behoben werden.

Dies wird durch ein Verfahren mit den Merkmalen von Anspruch 1 gelöst. Demnach ist erfindungsgemäß vorgesehen, dass in einem Kalibriermodus anhand eines Prüfkörpers zumindest ein Kalibrierparameter der CNC-Maschine überprüft und zumindest ein Korrekturwert festgelegt wird, wobei die CNC-Maschine im Bearbeitungsmodus in Abhängigkeit des zumindest einen Korrekturwerts betrieben wird, wobei überprüft wird, in welchem Winkel eine Rotationsachse der Einspannvorrichtung zu einer Ebene steht, welche von zwei Raumachsen aufgespannt ist, wobei die Überprüfung erfolgt, indem ein Prüftaster entlang der zweiten Raumachse verfahren wird und über die Differenz der abgetasteten Punkte zur dritten Raumachse der Winkel der Rotationsache der Einspannvorrichtung relativ zur Ebene berechnet wird, wobei die Ausrichtung der Rotationsachse der Einspannvorrichtung relativ zur Ebene einen Kalibrierparameter bildet. Mit anderen Worten kann dadurch also jede CNC-Maschine vor oder mit der ersten Inbetriebnahme kalibriert werden. Im Speziellen wird zumindest ein bestimmter Kalibrierparameter überprüft und eine Abweichung zu einem (theoretischen) Ideal- bzw. Sollwert ermittelt. Diese Abweichung bildet die Basis für den Korrekturwert, welcher dann bei jeder Bearbeitung berücksichtigt wird. Somit ist es möglich, dass diverse Parameter (z. B. die Achsausrichtung) der CNC-Maschine nicht einem exakten Sollwert entsprechen, dennoch aber eine genaue Bearbeitung ermöglicht wird, indem die Abweichungen dieser Parameter berücksichtigt werden.

Gemäß einem bevorzugten Ausführungsbeispiel kann vorgesehen sein, dass ein Kalibrierparameter die Ausrichtung von zumindest zwei, vorzugsweise drei, Raumachsen der CNC-Maschine zueinander ist. Eine "falsche" oder verzerrte Ausrichtung von Achsen zueinander wird auch "axis distortion" genannt. Mit anderen Worten ist dabei ein Versatz der Achsen zueinander vorhanden. Im Idealfall sind die Achsen in einem Winkel von 90° zueinander angeordnet. Da dies jedoch nur in den seltensten Fällen exakt zutreffen wird und es dadurch zu Abweichungen von der zu produzierenden Sollform kommt, wird diese "axis distortion" durch das Abtasten und Berechnen von Korrekturfaktoren bzw. - werten erfasst und dieser entgegengewirkt.

Zusätzlich oder alternativ kann auch vorgesehen sein, dass ein Kalibrierparameter ein Nullpunkt der Einspannvorrichtung ist. Durch Anwenden des Kalibriermodus wird ein Korrekturwert ermittelt. In diesem Fall kann dieser als "spindle offset" bezeichnet werden.

Zusätzlich oder alternativ kann darüber hinaus vorgesehen sein, dass ein Kalibrierparameter zumindest ein Referenzpunkt des Prüfkörpers relativ zur Einspannvorrichtung ist. Beispielsweise können vier Referenzpunkte, sogenannte "slot offsets" ermittelt und verglichen werden, woraus dann wiederum ein Korrekturwert ermittelt und festgelegt wird.

Bevorzugt ist vorgesehen, dass im Kalibriermodus der Prüfkörper in der Einspannvorrichtung eingespannt ist. Alternativ oder zusätzlich kann auch vorgesehen sein, dass der Prüfkörper von der Einspannvorrichtung mitgebildet ist. In anderen Worten ist der Prüfkörper einstückig mit Einspannvorrichtung ausgebildet. Mithin weist die Einspannvorrichtung auch zur Kalibrierung geeignete Prüfbereiche auf. Diese Variante kann vor allem dazu eingesetzt werden, um die Achsausrichtung zu überprüfen und entsprechend zu kalibrieren.

Die oben angeführte Aufgabe wird auch durch eine CNC-Maschine mit den Merkmalen von Anspruch 6 gelöst. Demnach ist vorgesehen, dass in einem Kalibriermodus der Steuer- oder Regeleinheit anhand eines, vorzugsweise in der Einspannvorrichtung eingespannten, Prüfkörpers zumindest ein Kalibrierparameter der CNC-Maschine überprüfbar ist, indem ein Prüftaster entlang der zweiten Raumachse verfahrbar ist und über die Differenz der abgetasteten Punkte zur dritten Raumachse der Winkel der Rotationsache der Einspannvorrichtung relativ zur Ebene berechenbar ist, wobei die Ausrichtung der Rotationsachse der Einspannvorrichtung relativ zur Ebene einen Kalibrierparameter bildet, und zumindest ein Korrekturwert festlegbar ist, wobei die CNC-Maschine im Bearbeitungsmodus in Abhängigkeit des zumindest einen Korrekturwerts von der Steuer- oder Regeleinheit ansteuerbar oder regelbar ist. Das heißt, über die Steuer- oder Regeleinheit ist die CNC-Maschine sowohl in einem Bearbeitungsmodus als auch in einem Kalibriermodus betreibbar. Im Bearbeitungsmodus werden dann die Maschinenfehler auf Basis des zumindest einen Korrekturwertes kompensiert.

Allgemein kann dieser Kalibriermodus bei jeder beliebigen dentalen CNC-Maschine eingesetzt werden, also unabhängig davon wieviele Achsen die CNC-Maschine aufweist. Es kann beispielsweise vorgesehen sein, dass die CNC-Maschine lediglich zwei oder drei Achsen aufweist. Demnach ist erfindungsgemäß ein Gehäuse, eine erste Antriebsvorrichtung, mit welcher die Einspannvorrichtung relativ zum Gehäuse um zumindest eine Achse bewegbar ist, und eine zweite Antriebsvorrichtung, mit welcher die Bearbeitungsvorrichtung relativ zum Gehäuse entlang zumindest einer Achse bewegbar ist, vorgesehen. Dabei kann die Einspannvorrichtung einen, vorzugsweise c-förmigen, Träger, einen am Träger drehbar gelagerten Halterahmen und einen am Halterahmen drehbar gelagerten Innenring aufweisen. Dieses Beispiel bezieht sich auf die sogenannte M5, welche von der Firma Zirkonzahn GMBH produziert wird. Bei dieser CNC-Maschine können mehrere Bearbeitungsspindeln montiert werden.

Bevorzugt ist allerdings vorgesehen, dass die CNC-Maschine als 5-Achs-Maschine ausgebildet ist. Im Speziellen ist also vorgesehen, dass die erste Antriebsvorrichtung drei Antriebsmotoren aufweist, wobei der Träger durch einen ersten Antriebsmotor entlang einer ersten Raumachse horizontal bewegbar ist, der Halterahmen durch einen zweiten Antriebsmotor um eine erste Rotationsachse drehbar ist und der Innenring durch einen dritten Antriebsmotor um eine zweite Rotationsachse drehbar ist. Zudem ist vorgesehen, dass die zweite Antriebsvorrichtung zwei Antriebsmotoren aufweist, wobei die Bearbeitungsvorrichtung von einem vierten Antriebsmotor entlang einer zweiten Raumachse vertikal bewegbar ist und von einem fünften Antriebsmotor entlang einer dritten Raumachse horizontal bewegbar ist. Die genaue Aufteilung dieser fünf Achsen kann natürlich auch anders sein. Zum Beispiel kann die Bearbeitungsvorrichtung entlang aller drei Raumachsen relativ zum Gehäuse bewegbar sein, während die Einspannvorrichtung nur um eine Rotationsachse relativ zum Gehäuse bewegbar ist. Dieses Beispiel bezieht sich auf die sogenannte M4, welche von der Firma Zirkonzahn GMBH hergestellt wird.

Darüber hinaus ist erfindungsgemäß vorgesehen, dass über eine dritte Antriebsvorrichtung ein in der Bearbeitungsvorrichtung eingespanntes Bearbeitungswerkzeug in Form eines Fräsers, Bohrers oder Schleifers um eine Bearbeitungsachse drehbar antreibbar ist. Somit bildet diese Bearbeitungsachse sozusagen die insgesamt sechste Achse. Diese Bearbeitungsvorrichtung kann als Bearbeitungsspindel ausgebildet sein. Bevorzugt kann auch vorgesehen sein, dass die CNC-Maschine mehrere, vorzugsweise parallel zueinander angeordnete, Bearbeitungsvorrichtungen aufweist.

Weitere Einzelheiten und Vorteile der vorliegenden Erfindung werden anhand der Figurenbeschreibung und der Bezugnahme auf die im Folgenden dargelegten Ausführungsbeispiele näher erläutert. Darin zeigen:

Fig. 1          eine perspektivische Darstellung einer CNC-Maschine (M5),
Fig. 2          eine Frontansicht einer weiteren CNC-Maschine (M4),
Fig. 3          schematisch die Neigung zur YZ-Ebene,
Fig. 4a         eine Draufsicht auf die Einspannvorrichtung mit vier kreisförmigen Werkstückaufnahmen,
Fig. 4b         drei verschiedene Ansichten eines Prüfkörpers mit vier Ausnehmungen,
Fig. 4c         eine Frontansicht einer CNC-Maschine mit einem in die Einspannvorrichtung eingespannten Prüfkörper und
Fig. 5 bis 24   verschiedene Darstellungen zur Veranschaulichung möglicher Kalibrierabläufe.

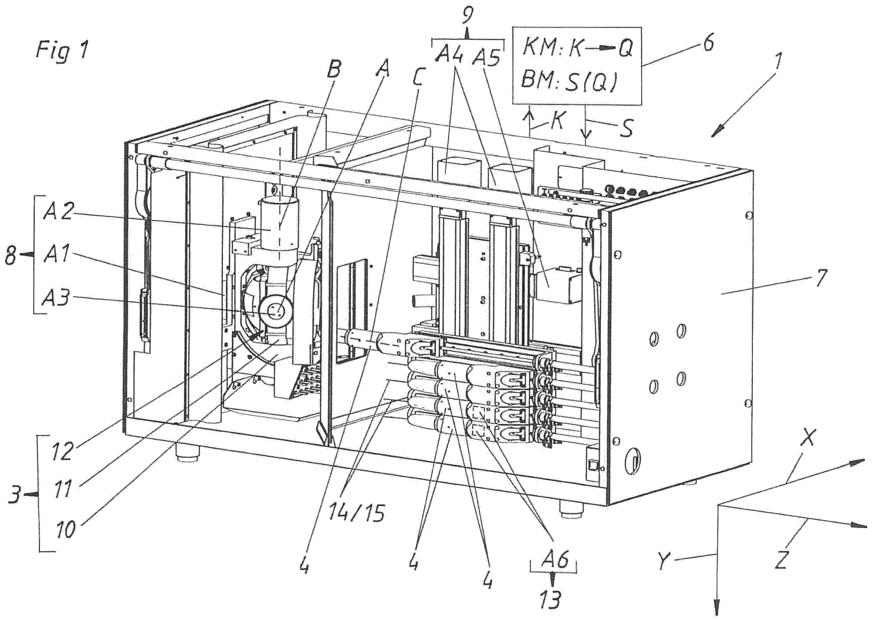

In Fig. 1 ist eine CNC-Maschine 1 (entspricht der M5 genannten Maschine) zur Bearbeitung eines nicht dargestellten dentalen Werkstücks 2 ersichtlich. Dieses dentale Werkstück 2 ist in der Einspannvorrichtung 3 gehalten, wobei diese Einspannvorrichtung 3 relativ zum Gehäuse 7 der CNC-Maschine 1 von einer ersten Antriebsvorrichtung 8 um zwei Rotationsachsen A, B und entlang der Raumachse X in horizontaler Richtung bewegbar gelagert ist. Konkret ist für jede dieser Achsen ein eigener Antriebsmotor A1, A2 und A3 (z. B. Elektromotor) vorgesehen. Die Einspannvorrichtung 3 weist einen relativ zum Gehäuse 7, vorzugsweise linear in X-Richtung, bewegbaren c-förmigen Träger 10 und einen am Träger 10 drehbar (erste Rotationsachse B) gelagerten Halterahmen 11 (Außenring) auf. Bevorzugt ist in diesem Halterahmen 11 noch ein nicht im Detail erkennbarer Innenring (zweite Rotationsachse A) bewegbar gelagert, an dem das dentale Werkstück 2 gehalten ist.

Zudem weist die CNC-Maschine 1 eine zweite Antriebsvorrichtung 9 zum Bewegen der Bearbeitungsvorrichtung 4 auf. Dabei umfasst die zweite Antriebsvorrichtung 9 einen Zwei-Achs-Antrieb (vierter Antriebsmotor A4 und fünfter Antriebsmotor A5) zum Bewegen der Bearbeitungsvorrichtung 4 entlang der Raumachsen Y und Z. Darüber hinaus ist eine dritte Antriebsvorrichtung 13 vorgesehen, welche einen Drehantrieb (sechster Antriebsmotor A6) zum drehenden Antreiben des Bearbeitungswerkzeugs 14 (insbesondere in Form eines Bohrers, Fräsers oder Schleifers) um die Bearbeitungsachse C aufweist. Auch hier ist bevorzugt für jede dieser Achsen (Y, Z und C) konkret ein eigener Elektromotor vorgesehen.

Weiters ist eine zentrale Steuer- oder Regeleinheit 6 vorgesehen, über die die CNC-Maschine 1 zumindest in den beiden Modi Bearbeitungsmodus BM und Kalibriermodus KM betrieben werden kann. In beiden Modi werden von der Steuer- oder Regeleinheit 6 entsprechende Bewegungssignale S an die Antriebsvorrichtungen 8, 9 und 13 übermittelt. Speziell im Kalibriermodus KM ist anstelle eines Bearbeitungswerkzeugs 14 ein Prüftaster 15 in der Bearbeitungsvorrichtung 4 eingespannt. Zudem ist in der Einspannvorrichtung 3 anstatt eines dentalen Werkstücks 2 der Prüfkörper 5 eingespannt. Im Kalibriermodus KM wird ein festgelegter Bewegungsablauf der Bearbeitungsvorrichtung 4 und der Einspannvorrichtung 3 relativ zum Gehäuse 7 abgefahren, wobei mehrere Kalibrierpunkte K erfasst werden. Die Steuer- oder Regeleinheit 6 berechnet aus diesen Kalibrierpunkten K dann zumindest einen Korrekturwert Q. Beispielsweise kann dies konkret bedeuten, dass die erste Raumachse X in einem Winkel von 89° (anstatt idealerweise genau 90°) zur zweiten Raumachse Y steht. Wenn dann nach dieser Kalibrierung die CNC-Maschine 1 wieder im Bearbeitungsmodus BM betrieben wird, wird dieser zumindest eine Korrekturwert Q berücksichtigt. Das heißt, die Bewegungssignale S werden von der Steuer- oder Regeleinheit 6 in Abhängigkeit des zumindest einen Korrekturwerts Q an die erste Antriebsvorrichtung 8 der Einspannvorrichtung 3 bzw. an die zweite Antriebsvorrichtung 9 der Bearbeitungsvorrichtung 4 entsprechend übermittelt.

Bevorzugt ist vorgesehen, dass der Prüftaster 15, mit welchem der Prüfkörper 5 abgetastet wird, von CNC-Maschine 1, im Speziellen von einer Bearbeitungsvorrichtung 4, automatisch aus einem Magazin geholt bzw. aufgenommen wird. Somit muss der Prüftaster 15 nicht aufwändig händisch von einem Anwender montiert werden. Es kann auch vorgesehen sein, dass über einen Kontakt des Prüftasters 15 mit dem Prüfkörper 5 ein Stromkreis geschlossen wird. Dafür sind der Prüfkörper 5 und der Prüftaster 15 zumindest bereichsweise metallisch ausgebildet und stehen jeweils über eine Signalleitung mit der Steuer- oder Regeleinheit 6 in elektrischer Verbindung. Sobald der Prüfkörper 5 vom Prüftaster 15 berührt wird, wird der Stromkreis geschlossen und der entsprechende Kalibrierparameter K von der Steuer- oder Regeleinheit 6 gespeichert. Grundsätzlich können aber auch andere Varianten von Tastern zum Einsatz kommen. Weiters kann auch vorgesehen sein, dass der Prüfkörper 5 - wenn er als von der Einspannvorrichtung 3 separates Teil ausgeführt ist - automatisch von der CNC-Maschine 1 aus einem Magazin entnehmbar und in einer Werkzeugaufnahme 18 der Einspannvorrichtung 3 aufnehmbar bzw. einspannbar ist.

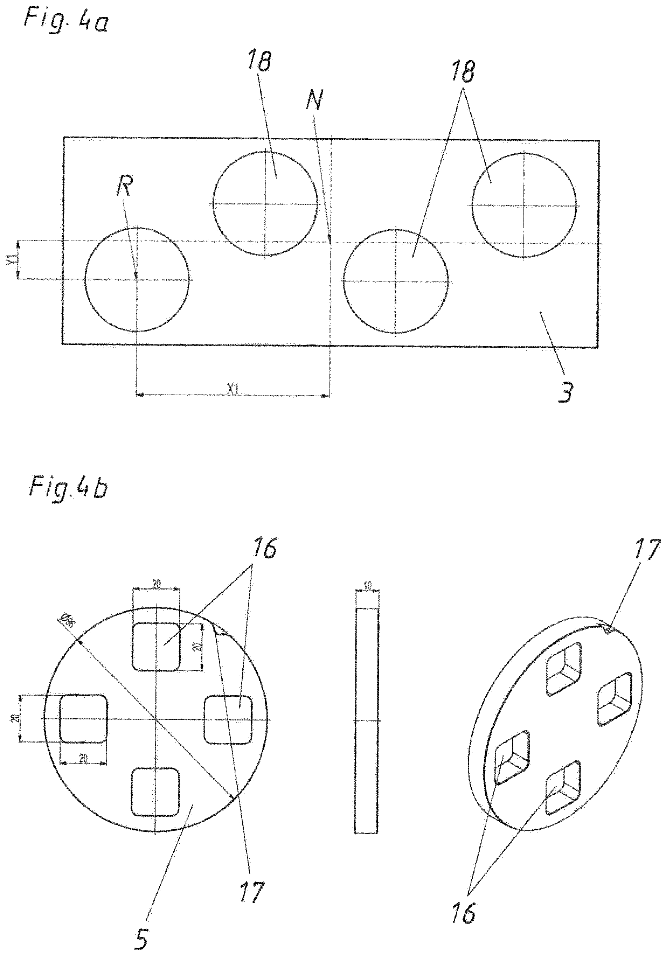

In Fig. 4b ist ein Beispiel für einen konkreten Prüfkörper 5 in einer Frontansicht, in einer Seitenansicht und in einer perspektivischen Ansicht dargestellt. Der Prüfkörper 5 weist vier, im Wesentlichen quadratische Ausnehmungen 16 auf. Die Seitenlänge dieser Ausnehmungen 16 beträgt 20 mm. Die Dicke des Prüfkörpers 5 beträgt 10 mm. Am Prüfkörper 5 ist auch ein Positionierbereich 17 (in diesem Fall in Form einer Vertiefung) ausgebildet, über welchen der Prüfkörper 5 an der Einspannvorrichtung 3 positioniert wird. Der Prüfkörper 5 kann auch anders ausgeformt sein, solange diese Form digital hinterlegt ist.

Auf Basis der nachfolgenden Figuren wird eine bevorzugte Variante eines Bewegungsablaufs im Kalibriermodus KM veranschaulicht.

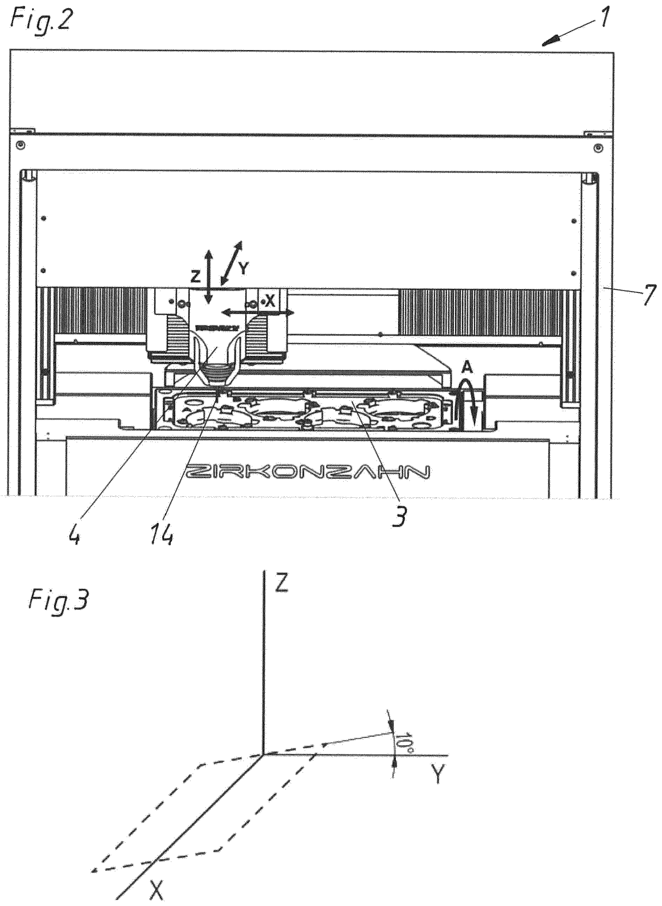

In Fig. 2 ist in einer Frontansicht eine CNC-Maschine 1 (entspricht der M4 genannten Maschine) dargestellt. Die Einspannvorrichtung 3 kann bei dieser CNC-Maschine 1 nur um die Rotationsachse A geschwenkt werden. Zusätzlich kann noch ein Bearbeitungswerkzeug 14 über eine Bearbeitungsspindel der Bearbeitungsvorrichtung 4 um eine hier nicht eingezeichnete Bearbeitungsachse C gedreht werden. Bei dieser CNC-Maschine 1 gemäß Fig. 2 sind die entlang der ersten Raumachse X und die entlang der dritten Raumachse Z bewegbaren Komponenten auf der Komponente montiert, welche entlang der zweite Raumachse Y bewegbar ist. Konkret ist die Spindel auf der Z-Achse montiert, diese ist wiederum auf der X-Achse montiert und diese wiederum auf der Y-Achse.

Die in der folgenden Beschreibung angeführten Punkte (Kalibrierparameter K) können je nach Verfahrensschritt aufgenommen werden, woraufhin eine Berechnung erfolgt. Alternativ können auch alle Punkte in einem Durchgang aufgenommen werden, sodass die Berechnung aller Korrekturwerte Q erst am Ende erfolgt. Dies bietet die Möglichkeit, dass auch nur einzelne Korrekturwerte Q ermittelt werden können.

Als ein erster Schritt wird gemäß Fig. 3 überprüft, in welchem Winkel die Rohlingsaufnahme (Einspannvorrichtung 3) zur YZ-Ebene steht, welche von der zweiten Raumachse Y und der dritten Raumachse Z aufgespannt ist. Dies gibt Auskunft darüber, um welchen Winkel die Rotationsachse A gedreht ist, wenn man auf die YZ-Ebene schaut. In dem gezeigten Fall ist die Rotationsachse A um 10° geschwenkt. Dies wird erreicht, indem der Prüftaster 15 entlang der zweiten Raumachse Y verfahren wird und über die Z-Differenz der abgetasteten Punkte dann der Winkel berechnet wird. Dieser Schritt kann dann optional bei der Vorder- und der Rückseite des Prüfkörpers 5 durchgeführt werden (Schwenken um 180°), um dann mit dem Mittelwert weiterzuarbeiten. Die Stellung bzw. Ausrichtung (Kalibrierparameter K) der Rotationsachse A wird dann so lange angepasst, bis ein Winkel von annähernd 0° erreicht wird, welcher dann auch hinterlegt wird (Korrekturwert Q).

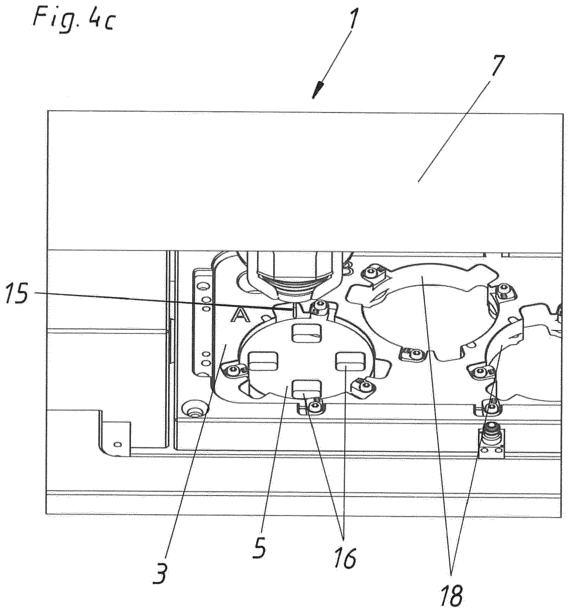

In einem weiteren Schritt wird dann mit Verweis auf Fig. 4a überprüft, wo in diesem Fall die horizontale Mittelebene und der Nullpunkt N in Z-Richtung der Einspannvorrichtung 3 ist, welche sich in diesem Fall um die Rotationsachse A gemäß Fig. 2 schwenken lässt. Dies wird als "spindle offset" bezeichnet. Unter "spindle offset" wird hier die Bestimmung des absoluten Nullpunktes N der kompletten Einspannvorrichtung 3 mit allen vier (in dieser Darstellung nicht mit Werkstücken 2 oder einem Prüfkörper 5 bestückten) Werkstückaufnahmen 18 ("slots") verstanden. Somit bildet bei dieser Kalibrierung die Einspannvorrichtung 3 selbst den Prüfkörper. Anders ausgedrückt bilden die Werkstückaufnahmen 18 bestimmte Prüfbereiche bei der Kalibrierung. Es können aber auch gesonderte, nicht dargestellte Bereiche der Einspannvorrichtung 3 als Prüfbereiche vorgesehen sein. Die Kalibrierung kann zusätzlich oder alternativ auch über einen Prüfkörper 5, welcher in die Einspannvorrichtung 3 eingespannt ist, erfolgen. Dies ist in Fig. 4c veranschaulicht. Die Steuer- oder Regeleinheit 6 der CNC-Maschine weiß, wenn keine Absolutmesssysteme verwendet werden und die Position der Einspannvorrichtung 3 hinterlegt ist, nur ungefähr, wo sich die Werkstückaufnahmen 18 befinden. Dies wird über Anfahren von Endschaltern bestimmt. Nun werden in diesem Fall, vorzugsweise alle vier, Prüfkörper 5 in den Werkstückaufnahmen 18 in Richtung der Raumachsen X, Y und Z vermessen. Somit weiß man dann den absoluten Nullpunkt N der kompletten Einspannvorrichtung 3. In diesem Schritt kann man aber auch gleichzeitig alle anderen notwendigen Werte zur Berechnung des "slot offsets" (Referenzpunkt R) erhalten. Dies ist dann der Abstand in allen Achsrichtungen zum "spindle offset" (Nullpunkt N). Im Falle einer einzigen, zentral gelegenen Werkstückaufnahme 18, sind "spindle offset" und "slot offset" dasselbe. Zur Bestimmung dieser "offsets" wird das Umschlagverfahren verwendet. Dadurch lässt sich vermeiden, dass beispielweise durch eine schräg eingespannte Kalibrierplatte (Prüfkörper 5) die Messergebnisse verfälscht werden. Hierbei wird ein Umschlag von 180° durchgeführt. Durch Berechnung des Mittelwertes der aufgenommenen Punkte erhält man dann den gesuchten Wert (Korrekturwert Q), welcher keine systematischen Messabweichungen mehr enthält. Unter Umständen kann das Umschlagverfahren auch entfallen.

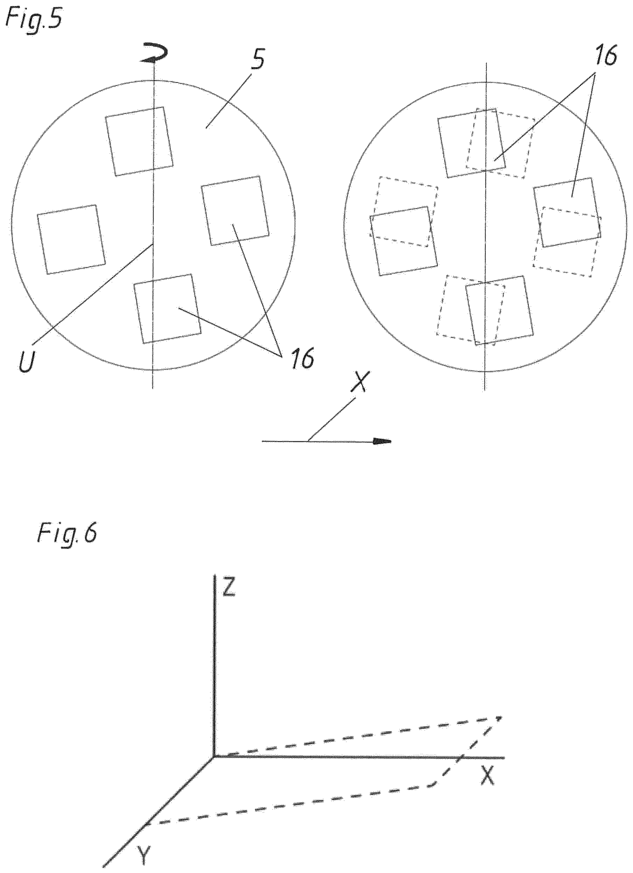

Beispielhaft sei hierzu auf Fig. 5 verwiesen. Diese Fig. 5 zeigt, dass der Prüfkörper 5 schräg eingespannt ist. Möchte man hier das Zentrum in X Richtung bestimmen, werden die vier Ausnehmungen 16 in X-Richtung abgetastet. Pro Ausschnitt erhält man jedoch verfälschte Messwerte aufgrund der Schräge des Prüfkörpers 5. Wird nun jedoch ein Messpunkt mit dem gespiegelten Messpunkt (nach dem Umschlag) verglichen, erhält man den Mittelwert, welcher genau auf der Umschlagsachse U liegen sollte. Um das Ergebnis weiter zu verbessern, wird dies bei allen vier Ausnehmungen 16 durchgeführt.

Wieder mit Verweis auf die Fig. 3 kann folgendes ausgeführt werden: Da die Kalibrierplatte (Prüfkörper 5) eine Dicke von 10 mm hat und die Werkstückaufnahme 18 so gemacht ist, dass die Kalibrierplatte beim Einspannen theoretisch genau 5 mm nach oben und nach unten bezogen zur Nullebene übersteht, würde es ausreichen, dass man z. B. nur auf der Oberseite abtastet um das "spindle offset" zu erhalten. Da jedoch auch Schmutz beim Einspannen die Lage der Kalibrierplatte in der Werkstück- bzw. Rohlingsaufnahme verfälschen kann, wird mit dem Umschlagverfahren gearbeitet. So wird ein Versatz des Prüfkörpers 5 in Z-Richtung durch Vergleich eines Punktes an der Ober- und Unterseite kompensiert. Dies kann dann an beliebig vielen Punkten, in diesem Fall vier, durchgeführt werden. Anhand dieser wird dann wieder ein Mittelwert errechnet. Der erhaltene Punkt muss nicht zwingend als Nullpunkt hinterlegt werden.

Als weiterer Schritt wird unter Verweis auf Fig. 6 dann noch überprüft, wie die horizontale Ebene der Werkstückaufnahme geschwenkt ist. Wird dies in einer Draufsicht auf die XZ-Ebene betrachtet, erhält man dann den Winkel zur ersten Raumachse X. In diesem kann man auch sagen, dass der Winkel zwischen der Rotationsachse A und der ersten Raumachse X gemessen wird. Die Rotationsachse A liegt dementsprechend auf dieser horizontalen Rohlingsebene und diese kann um die Rotationsachse A geschwenkt werden. Hierfür wird dann in der ersten Raumachse X verfahren und über die Z-Differenz der abgetasteten Punkte der Winkelversatz errechnet und dann über einen Korrekturwert Q berücksichtigt. Beispielsweise kann dies wiederum nur an der Oberseite durchgeführt werden, optional kann jedoch auch um 180° geschwenkt werden, worauf der Mittelwert aus Vorder- und Rückseite gebildet wird. Diese Messungen können nur bei einer Werkstückaufnahme 18 durchgeführt werden. Optional kann jedoch jede dieser Messungen für jede Werkstückaufnahme 18 ("slot") durchgeführt und eigen Werte abgespeichert werden. Man kann auch aus diesen gesamten Werten wieder übergreifende Mittelwerte bilden.

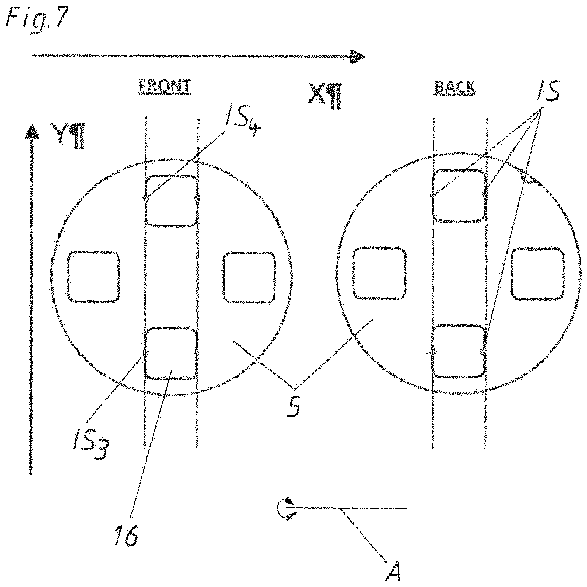

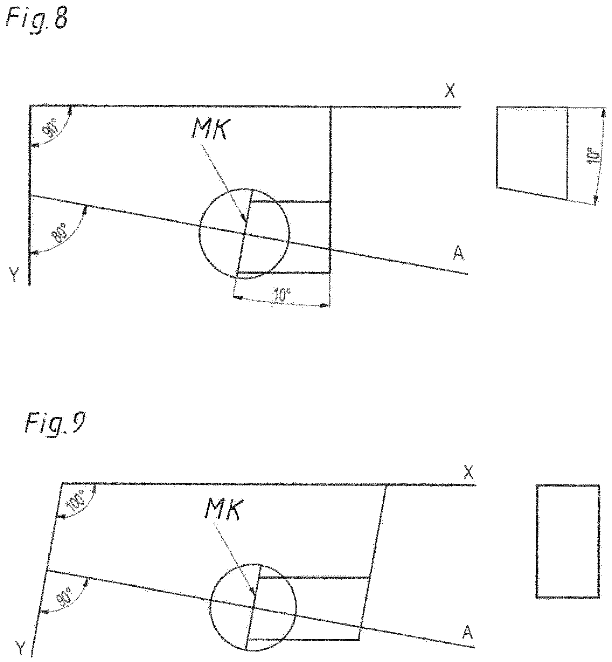

In einem weiteren Schritt, veranschaulicht in Fig. 7, werden die Innenseiten IS des Prüfkörpers 5 auf der Vorderseite und der Rückseite abgetastet, um den Fehler zu kompensieren, sollte der Prüfkörper 5 schräg eingespannt sein, wie in Fig. 5 schon einmal dargestellt. Um genauere Ergebnisse zu erhalten, kann dies an der rechten und/oder an der linken Innenseite IS durchgeführt werden. Hier wird entlang der zweiten Raumachse Y verfahren und dann der Abstand entlang der zweiten Raumachse X abgetastet. Über die X-Differenz lässt sich der Winkel errechnen. Die gesammelten Werte werden dann wieder in einem Mittelwert zusammengeführt. Theoretisch, wie auch bei den anderen Messschritten, ist es hier generell nicht unbedingt notwendig vier Winkel zu vermessen. Man könnte nur von der Vorderseite "Front" die zwei Punkte $IS_4$ und $IS_3$ an den Innenseiten IS verwenden um einen Winkel zu erhalten. Durch umschlagen um 180° um die Rotationsachse A auf die Rückseite "Back" und vermessen der Punkte $IS_4$ und $IS_3$ auf der Rückseite kann man jedoch den Mittelwert der beiden Winkel bilden und ist somit genauer. Als weitere Ausbaustufe wird die Vermessung wie schon angesprochen an der linken und rechten Kalibrierplatteninnenfläche durchgeführt. Dieses "Spiel" könnte dann noch bei weiteren Ausnehmungen 16 und dazugehörigen Innenseiten IS wiederholt werden. Der erhaltene Winkel lässt rückschließen auf den Winkel zwischen zweiter Raumachse Y und Rotationsachse A. Hierfür werden einige Ansichten gemäß Fig. 8 auf die XY-Ebene dargestellt. Durch Verwenden der Umschlagsmethode erhält man eine Mittellinie MK der Kalibrierplatte, welche immer 90° zur Rotationsachse A steht. Wird in Y-Richtung auf 2 definierte Positionen verfahren und dann der X-Abstand gemessen, lässt sich der Winkel zwischen Y und A aufgrund der X-Differenz bestimmen. Hierzu werden die ermittelten Abstände in ein rechtwinkeliges Koordinatensystem übertragen (siehe Detail rechts oben). Dabei sind die Verfahrwege in X und Y anders als in der linksseitigen Darstellung orientiert. In diesem Beispiel geht man davon aus, dass X und Y im 90°-Winkel zueinander stehen. In diesem Details rechts oben steht die obere horizontale Linie für den Verfahrweg in Y. Die beiden vertikalen Linien stehen für den Verfahrweg in X. Die untere horizontale bzw. leicht schräge Linie stellte die Winkelabweichung dar. Dieselben Erläuterungen gelten sinngemäß auch für die jeweils rechts oben dargestellten Details in den Fig. 9 bis 11 und 13 bis 16.

Es kann jedoch auch sein, dass X und Y nicht im 90°-Winkel zueinander stehen, wie dies in Fig. 9 veranschaulicht ist. Wenn jedoch die A-Achse im 90°-Winkel zur Y-Achse steht, macht sich das dadurch bemerkbar, dass der Verfahrweg in X an beiden Positionen derselbe ist.

In diesen beiden gezeigten Fällen gemäß Fig. 8 und 9 stehen jeweils zwei Achsen in einem 90°-Winkel zueinander. Somit kann jeweils die Y-Achse zur A-Achse richtig berechnet werden. Diese Darstellungen sind theoretisch um das Prinzip zu erklären. Die Mittellinie MK erhält man rein rechnerisch über die Umschlagsmethode und auch die in den zwei Beispielen angesprochenen Abstände in X-Richtung werden rechnerisch ermittelt. Andererseits kann man auch davon ausgehen, dass die Kalibrierplatte ohne Winkelversatz in der Werkstückaufnahme eingespannt ist und somit das Umschlagen überflüssig machen würde.

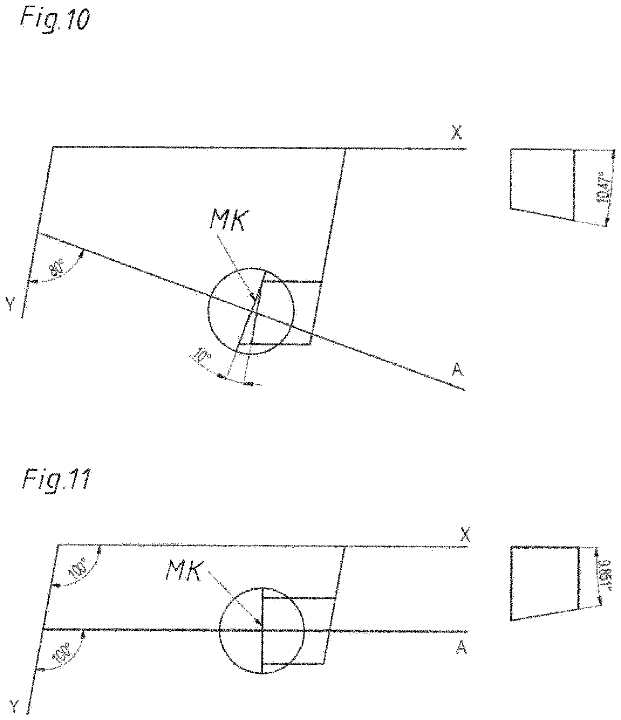

Nun kann jedoch auch der Fall eintreten, dass alle Achsen zueinander schräg stehen. Bei einer solchen (dritten) Möglichkeit kann es sein, dass die A-Achse weder parallel zur X-Achse noch senkrecht zur Y-Achse steht, wie dies in Fig. 10 dargestellt ist. Auch hier kann man wieder über die Differenz in X-Richtung den Winkel zwischen der Y-Achse und der A-Achse berechnen. Man muss jedoch eine Annahme treffen in diesem Konstrukt. Man weiß den Verfahrweg in Y und die Wege in X. Doch dadurch, dass in dem Fall kein 90°-Winkel im System vorhanden ist, ist es nicht möglich den Winkel der Y-Achse zur A-Achse 100 % genau zu bestimmen. Es ist also nicht möglich über die erhaltenen Werte auf den richtigen Winkel zu kommen, da eine Unbekannte zu viel vorhanden ist. Wie man sehen kann, hat man bei der dargestellten Konfiguration einen Fehler von ca. 5% anhand der Abweichung von 10° zu 10,47°.

Ein ähnliches Problem ist auch in Fig. 11 veranschaulicht.

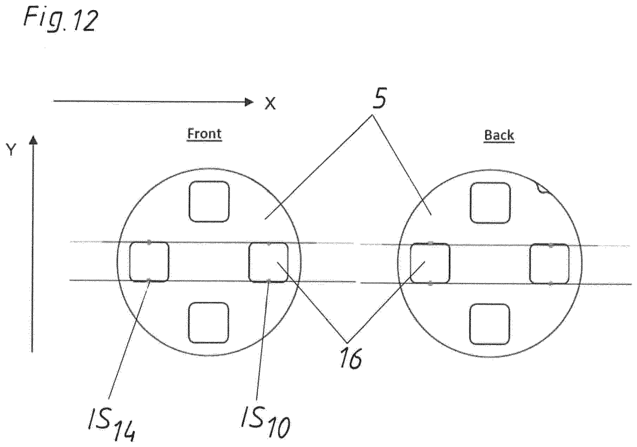

Für die weiteren Schritte kann man nun davon ausgehen, dass der oben genannte Fehler akzeptiert wird und mit dem fehlerbehafteten Wert weitergerechnet wird, vor allem da es sich bei den gezeigten Fällen schon um Extremfälle handelt, welche in Realität selten eintreten werden. Demnach fehlt - mit Verweis auf Fig. 12 - noch die Stellung der X-Achse zur A-Achse. Um dies zu berechnen, betrachtet man die Punkte $IS_{14}$ und $IS_{10}$ in Fig. 12. An diesen Stellen werden wieder die Innenflächen des Prüfkörpers 5 abgetastet. Wie beim Beispiel gemäß Fig. 7 ist es auch hier möglich, von der Vorderseite "Front" nur die Punkte $IS_{14}$ und $IS_{10}$ abzutasten. Es wird ein definierter Weg in X-Richtung verfahren und der Abstand in Y-Richtung betrachtet. Über die Y-Differenz kann dann der Winkel berechnet werden. Um dieses Messergebnis zu verbessern, wird wieder die Umschlagmethode verwendet. Zusätzlich können auch wieder die Messpunkte an der gegenüberliegenden Seite genommen werden. Über diese Messpunkte kann man sich dann auch die Umschlagachse U berechnen.

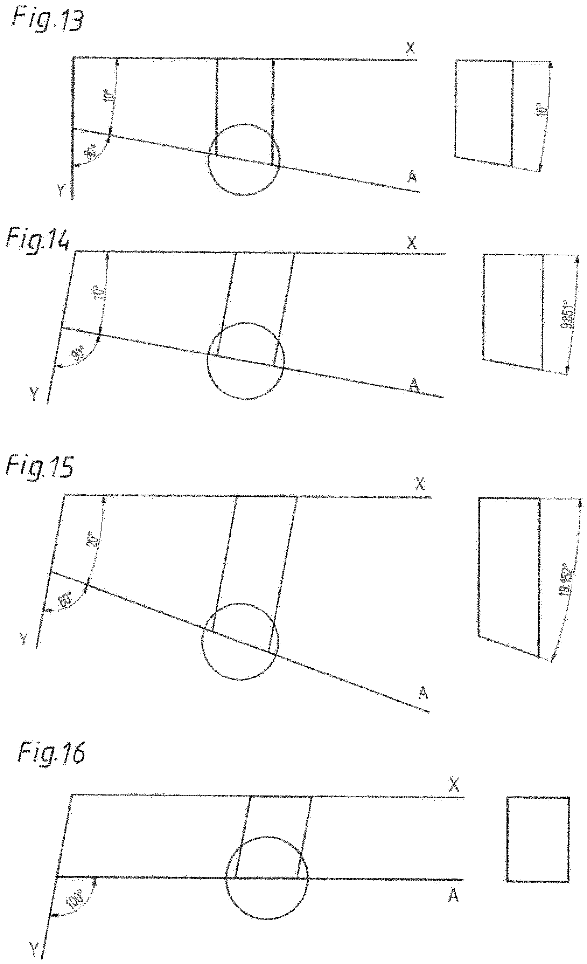

An sich erfolgt der komplette Ablauf gemäß der Fig. 13 bis 16 wie beim Beispiel gemäß den Fig. 7 bis 9 beschrieben, wobei auch ähnliche Fehlkalkulationen auftreten können. Da diese aber sehr gering sind, wird dennoch eine deutliche Verbesserung der Bearbeitungs- bzw. Fräsergebnisse erzielt.

Um auch diesen Fehler zu kompensieren, kann auf den folgenden Ablauf verwiesen werden. Konkret wird dabei die Ausrichtung der Y-Achse und X-Achse berechnet.

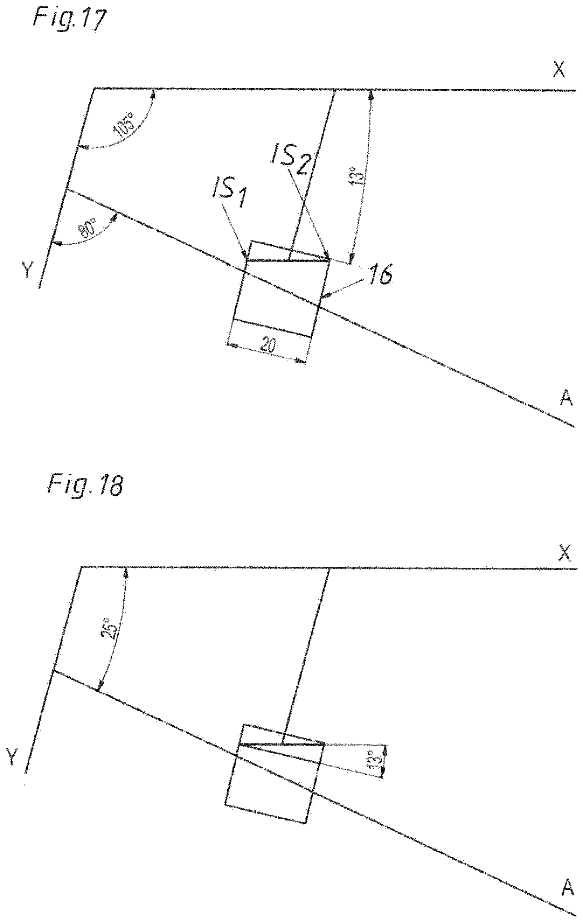

Mit Verweis auf Fig. 17 werden die Innenflächen bzw. Innenseiten IS von mindestens einem Ausschnitt (Ausnehmung 16) im Prüfkörper 5 abgetastet. Dabei wird jedoch nur noch in X-Richtung verfahren, um keinen Y-Fehler zu erhalten. Man erhält die X Werte für den Punkt $IS_1$ und den Punkt $IS_2$. In diesem Fall spielt es auch keine Rolle, ob der Prüfkörper 5 schief eingespannt ist, denn diese Fehlstellung kann nun kompensiert werden. Die Maße der in diesem Fall quadratischen Ausnehmung 16 sind in diesem Fall mit der Seitenlänge von 20 mm bekannt. Über den X-Abstand der Punkte $IS_1$ und $IS_2$ und der Ausnehmungsmaße, kann errechnet werden, um wie viel die Ausnehmung 16 um die X-Achse gedreht ist. Im in Fig. 18 gezeigten Fall beträgt diese Drehung 13°. Die Ausnehmung 16 mit einem Innenmaß von 20 mm muss hierbei sehr genau gefertigt werden.

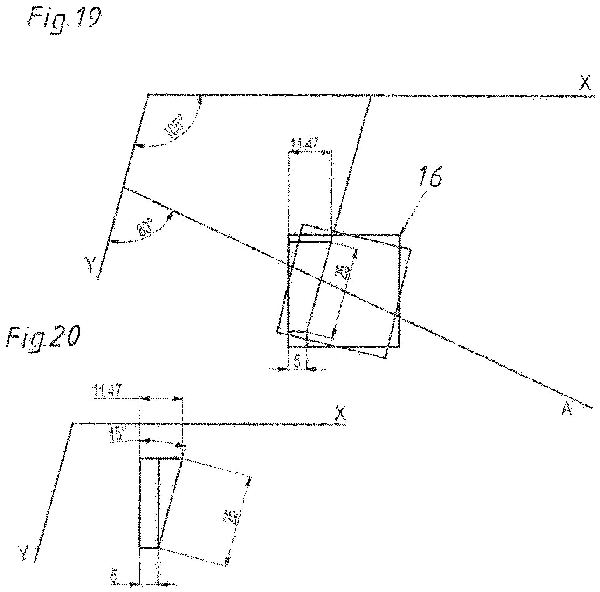

Im nächsten Schritt wird dann mit Verweis auf die Fig. 19 und 20 die Ausnehmung 16 virtuell um die ermittelte Fehlstellung gedreht. Nun wird die Ausnehmung 16 nochmals abgetastet, diesmal wird jedoch nur eine Seite abgetastet und zusätzlich in Y-Richtung zugestellt. Die erhaltenen Werte in X müssen jedoch nun auf die gedrehte Ausnehmung 16 umgerechnet werden. Über die Längendifferenz und den in Y-Richtung zugestellten Verfahrweg kann man sich dann ausrechnen, um wie viel die X-Achse und die Y-Achse vom 90°-Winkel abweichen. Es wird davon ausgegangen, dass die Ausnehmung 16 einen Winkel von 90° aufweist. So ist es dann möglich, in diesem Fall anhand der X-, Y- und A-Achse, die genaue Lage dieser zueinander zu bestimmen. Wird dieser zusätzliche Schritt mit dem Ausmessen und Drehen einer Ausnehmung nicht vorgenommen, ist es trotzdem möglich eine Kalibrierung vorzunehmen, wobei die Korrekturwerte Q jedoch kleine Abweichungen enthalten können. Mit den Korrekturwerten Q ist es dann möglich, beim Fräsen eines dentalen Werkstückes 2 den Achsversatz zu kompensieren. Dies ist dann auch bei Bedarf zusätzlich für die Z-Achse und bei Verwendung einer B-Achse anstelle einer A-Achse möglich. Es können auch eine A-, eine B- und eine C-Achse vorgesehen sein. Dementsprechend werden dann die beschriebenen Schritte in angepasster Form auch für diese Fälle angewendet. Mit diesem Zusatzschritt ist es möglich die vorhin beschriebenen Verfahrensschritte ohne Fehler aufgrund der unbekannten Stellung der Achsen zueinander durchzuführen, da nun ein zusätzlicher Winkel im System bekannt ist.

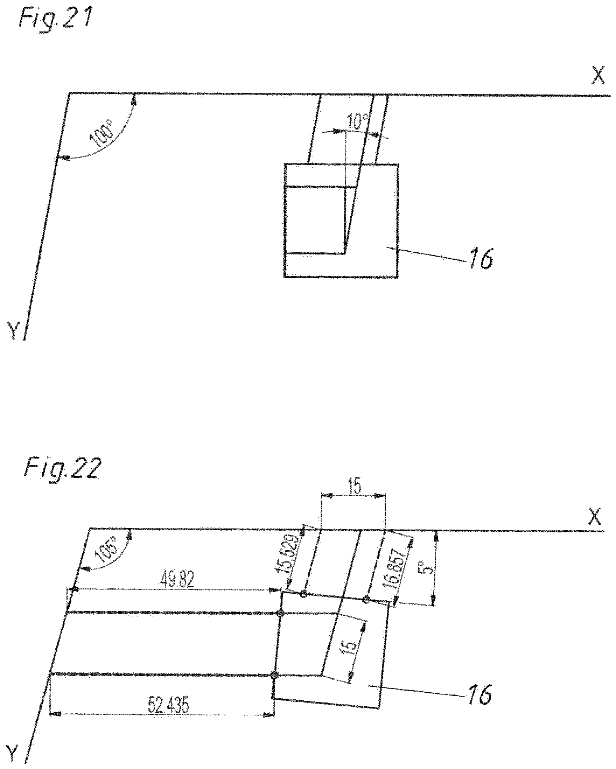

Es kann auch so wie in Fig. 21 gezeigt vorgegangen werden, um die Ausrichtung der X-Achse zur Y-Achse zu berechnen. In diesem Fall muss man jedoch wieder kleine Abweichungen bei der Auswertung in Kauf nehmen. Im nächsten gezeigten Fall kann man die Abweichung noch vermeiden, wenn die Ausnehmung 16 perfekt parallel zur X-Achse ausgerichtet ist. Über den unterschiedlichen Verfahrweg in Y-Richtung, welcher sich ergibt, wenn die vertikale Innenfläche der Ausnehmung 16 abgetastet wird, kann die Ausrichtung der Achsen zueinander berechnet werden.

Sollte nun jedoch auch die Ausnehmung 16 schräg in Bezug zur X-Achse liegen, ergibt sich wiederum ein kleiner Fehler, wie man in Fig. 22 sehen kann. Hier ist effektiv ein Winkel von 105° zwischen den Raumachsen X und Y gegeben, wobei die Ausnehmung 16 um 5° verdreht zur X-Achse liegt.

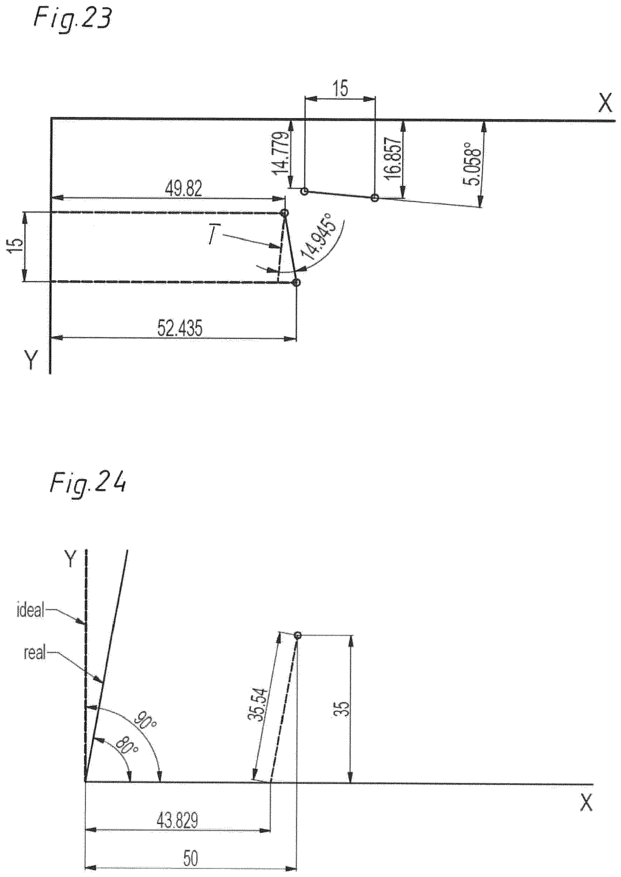

Werden diese Punkte nun in ein virtuelles rechtwinkliges Koordinatensystem übertragen, erhält man die Situation gemäß Fig. 23. Der Versatz der Achsen wird hier über die aufgenommenen Punkte und der theoretischen Linie T, welche in einem 90°-Winkel zur horizontal ausgerichteten Linie steht, bestimmt. Man kann sehen, dass es auf diese Weise zu geringen Abweichungen zu den 105° und 5° kommt. Diese bewegen sich jedoch im Hundertstelbereich und fallen somit kaum ins Gewicht.

Die angeführten Verfahrensweisen stellen nur ein paar Möglichkeiten dar, um eine solche Kalibrierung vorzunehmen und sind in diesen Fällen immer mit der X-, Y- und A-Achse dargestellt worden. Es versteht sich, dass sich diese auch auf Kombinationen mit anderen Rotations- und Translationsachsen adaptieren lassen.

Zusätzlich wird dann auch noch das "spindle offset" berechnet, wobei dazu auf die Fig. 4a verwiesen wird. Hierfür wird die Mittigkeit der Werkstückaufnahme 18 in einer X- und einer Y-Richtung ausgemessen. Dies kann entweder über die Geometrie der Werkstückaufnahme 18 selber oder über die Vermessung der Kalibrierplatte in den Werkstückaufnahmen 18 ("slots") erfolgen. Dafür werden wieder die Innenflächen der Ausnehmungen 16 abgetastet, die Einspannvorrichtung 3 um 180° geschwenkt und dann wieder die gegenüberliegenden Punkte kombiniert. So kann durch Vergleich der Messungen der einzelnen Ausnehmungen 16 auf das "spindle offset" und im Umkehrschluss dann auch auf den Abstand in X-Richtung und in Y-Richtung vom Nullpunkt N der Einspannvorrichtung 3 geschlossen werden. Diese Werte kann man auch erhalten, wenn der Prüfkörper 5 (Kalibrierplatte) nur in einer Ausnehmung 16 vermessen wird, da der Abstand zu den anderen Ausnehmungen 16 in der Regel definiert ist. Die eingespannten Prüfkörper 5 sind mit höchster Präzision und Maßgenauigkeit gefertigt. So sind alle Ausnehmungen 16 zueinander und selbst mit sehr engen Toleranzen versehen.

Eine Kompensation grafisch dargestellt kann wie in Fig. 24 aussehen. Im idealen Koordinatensystem soll ein Punkt mit den Koordinaten 50; 40 angefahren werden. Es wurde jedoch ermittelt, dass die Achsen nicht 90°, sondern in einem Winkel von 80° zueinander stehen. Somit kann errechnet werden, dass in X-Richtung nun 43,8 und in Y-Richtung 35,54 verfahren werden muss. Dazu kann auch auf folgende Formeln verwiesen werden.

$$xn = 50 - \left(\frac{35}{\tan(80)}\right) = 43{,}83 \qquad\qquad yn = \frac{35}{\sin(80)} = 35{,}54$$

Kurz mit anderen Worten zusammengefasst basiert die vorliegende Erfindung somit darauf, dass ein Prüftaster in einer Bearbeitungsspindel eingespannt wird, welcher dann einen Prüfkörper abfährt. Eine Software erkennt bestimmte Punkte bzw. speichert gemessene Punkte, woraus die Rechtwinkeligkeit und Parallelität bestimmter Kalibrierparameter (z. B. der Achsen) ermittelt wird. Abweichungen von einer theoretisch idealen Ausrichtung werden dadurch erkannt und später bei der Bearbeitung des dentalen Werkstücks berücksichtigt.

Bezugszeichenliste:

| | |
|---|---|
| 1 | CNC-Maschine |
| 2 | dentales Werkstück |
| 3 | Einspannvorrichtung |
| 4 | Bearbeitungsvorrichtung |
| 5 | Prüfkörper (Kalibrierplatte) |
| 6 | Steuer- oder Regeleinheit |
| 7 | Gehäuse |
| 8 | erste Antriebsvorrichtung |
| 9 | zweite Antriebsvorrichtung |
| 10 | Träger |
| 11 | Halterahmen |
| 12 | Innenring |
| 13 | dritte Antriebsvorrichtung |
| 14 | Bearbeitungswerkzeug |
| 15 | Prüftaster |
| 16 | Ausnehmung im Prüfkörper 5 |
| 17 | Positionierbereich |
| 18 | Werkstückaufnahme in Einspannvorrichtung 3 |
| BM | Bearbeitungsmodus |
| KM | Kalibriermodus |
| K | Kalibrierparameter |
| Q | Korrekturwert |
| A1-A6 | Antriebsmotoren |
| X | erste Raumachse |
| Y | zweite Raumachse |
| Z | dritte Raumachse |
| B | erste Rotationsachse |
| A | zweite Rotationsachse |
| C | Bearbeitungsachse |
| S | Bewegungssignal |
| N | Nullpunkt |
| R | Referenzpunkt |
| U | Umschlagachse |
| IS | Innenseiten |
| MK | Mittellinie |
| T | theoretische Linie |

**Patentansprüche**

1. Verfahren zum Betreiben einer CNC-Maschine, Computerized-Numerical-Control-Maschine, (1) und zum Bearbeiten eines dentalen Werkstücks (2), wobei die CNC-Maschine eine Einspannvorrichtung (3) zum Einspannen des dentalen Werkstücks (2) und eine Bearbeitungsvorrichtung (4) zum Bearbeiten des dentalen Werkstücks (2) aufweist, wobei beim Betreiben der CNC-Maschine (1) in einem Bearbeitungsmodus (BM) das in der Einspannvorrichtung (3) eingespannte dentale Werkstück (2) von der Bearbeitungsvorrichtung (4) der CNC-Maschine (1) bearbeitet wird, wobei die CNC-Maschine ein Gehäuse (7), eine erste Antriebsvorrichtung (8), eine zweite Antriebsvorrichtung (9), eine dritte Antriebsvorrichtung (13) und ein in der Bearbeitungsvorrichtung (4) eingespanntes Bearbeitungswerkzeug (14) in Form eines Fräsers, Bohrers oder Schleifers aufweist, wobei die CNC-Maschine eine erste Raumachse (X), eine zweite Raumachse (Y) und eine dritte Raumachse (Z) aufweist und mit der ersten Antriebsvorrichtung (8) die Einspannvorrichtung (3) relativ zum Gehäuse (7) um oder entlang zumindest einer Achse (X, A, B) bewegbar ist, mit der zweiten Antriebsvorrichtung (9) die Bearbeitungsvorrichtung (4) relativ zum Gehäuse (7) um oder entlang zumindest einer Achse (Y, Z) bewegbar ist und über die dritte Antriebsvorrichtung (13) das in der Bearbeitungsvorrichtung (4) eingespannte Bearbeitungswerkzeug (14) um eine Bearbeitungsachse (C) drehbar antreibbar ist, **dadurch gekennzeichnet, dass** beim Betreiben der CNC-Maschine (1) in einem Kalibriermodus (KM) anhand eines Prüfkörpers (5) zumindest ein Kalibrierparameter (K) der CNC-Maschine (1) überprüft und zumindest ein Korrekturwert (Q) festgelegt wird, wobei die CNC-Maschine (1) im Bearbeitungsmodus (BM) in Abhängigkeit des zumindest einen Korrekturwerts (Q) betrieben wird, wobei überprüft wird, in welchem Winkel eine Rotationsachse (A) der Einspannvorrichtung (3) zu einer Ebene (YZ) steht, welche von der zweiten Raumachse und der dritten Raumachse (Y, Z) aufgespannt ist,
   wobei die Überprüfung erfolgt, indem ein Prüftaster (15) entlang der zweiten Raumachse (Y) verfahren wird und über die Differenz der abgetasteten Punkte zur dritten Raumachse (Z) der Winkel der Rotationsache (A) der Einspannvorrichtung (3) relativ zur Ebene (YZ) berechnet wird, wobei die Ausrichtung der Rotationsachse (A) der Einspannvorrichtung (3) relativ zur Ebene (YZ) einen Kalibrierparameter (K) bildet.

2. Verfahren nach Anspruch 1, **dadurch gekennzeichnet, dass** ein Kalibrierparameter (K) die Ausrichtung von zumindest zwei Raumachsen (X, Y, Z) der CNC-Maschine zueinander ist.

3. Verfahren nach Anspruch 1 oder 2, **dadurch gekennzeichnet, dass** ein Kalibrierparameter (K) ein Nullpunkt (N) der Einspannvorrichtung (3) ist.

4. Verfahren nach einem der Ansprüche 1 bis 3, **dadurch gekennzeichnet, dass** ein Kalibrierparameter (K) zumindest ein Referenzpunkt (R) des Prüfkörpers (5) relativ zur Einspannvorrichtung (3) ist.

5. Verfahren nach einem der Ansprüche 1 bis 4, **dadurch gekennzeichnet, dass** bei Betrieb der CNC-Maschine (1) im Kalibriermodus (KM) der Prüfkörper (5) in der Einspannvorrichtung (3) eingespannt ist.

6. CNC-Maschine, Computerized-Numerical-Control-Maschine, (1) zum Bearbeiten eines dentalen Werkstücks (2), wobei die CNC-Maschine eine erste Raumachse (X), eine zweite Raumachse (Y) und eine dritte Raumachse (Z) aufweist, mit

   - einer Einspannvorrichtung (3) zum Einspannen des dentalen Werkstücks (2),
   - einer Bearbeitungsvorrichtung (4) zum Bearbeiten des dentalen Werkstücks (2),
   - einer Steuer- oder Regeleinheit (6) zum Steuern oder Regeln von Bewegungen der CNC-Maschine (1), wobei in einem Bearbeitungsmodus (BM) der Steuer- oder Regeleinheit (6) das dentale Werkstück (2) spanabhebend bearbeitbar ist,
   - einem Gehäuse (7),
   - einer ersten Antriebsvorrichtung (8), mit welcher die Einspannvorrichtung (3) relativ zum Gehäuse (7) um oder entlang zumindest einer Achse (X, A, B) bewegbar ist,
   - einer zweiten Antriebsvorrichtung (9), mit welcher die Bearbeitungsvorrichtung (4) relativ zum Gehäuse (7) um oder entlang zumindest einer Achse (Y, Z) bewegbar ist,
   - einem in der Bearbeitungsvorrichtung (4) eingespannten Bearbeitungswerkzeug (14) in Form eines Fräsers, Bohrers oder Schleifers und
   - einer dritten Antriebsvorrichtung (13), wobei über die dritte Antriebsvorrichtung (13) das in der Bearbeitungsvorrichtung (4) eingespannte Bearbeitungswerkzeug (14) um eine Bearbeitungsachse (C) drehbar antreibbar ist,

   **dadurch gekennzeichnet, dass** in einem Kalibriermodus (KM) der Steuer- oder Regeleinheit (6) anhand eines Prüfkörpers (5) zumindest ein Kalibrierparameter (K) der CNC-Maschine (1) überprüfbar ist, indem ein Prüftaster (15) entlang der zweiten Raumachse (Y) verfahrbar ist und über die Differenz der abgetasteten Punkte zur dritten Raumachse (Z) der Winkel der Rotationsache (A) der Einspannvorrichtung (3) relativ zur Ebene (YZ), welche von der zweiten Raumachse und der dritten Raumachse (Y, Z) aufgespannt ist, berechenbar ist, wobei die Ausrichtung der Rotationsachse (A) der Einspannvorrichtung (3) relativ zur Ebene (YZ) einen Kalibrierparameter (K) bildet, und zumindest ein Korrekturwert (Q) festlegbar ist, wobei die CNC-Maschine (1) im Bearbeitungsmodus (BM) in Abhängigkeit des zumindest einen Korrekturwerts (Q) von der Steuer- oder Regeleinheit (6) ansteuerbar oder regelbar ist.

7. CNC-Maschine nach Anspruch 6, **dadurch gekennzeichnet, dass** die erste Antriebsvorrichtung (8) drei Antriebsmotoren (A1, A2, A3) und die Einspannvorrichtung (3) einen, vorzugsweise c-förmigen, Träger (10), einen am Träger (10) drehbar gelagerten Halterahmen (11) und einen am Halterahmen (11) drehbar gelagerten Innenring (12) aufweist, wobei der Träger (10) durch einen ersten Antriebsmotor (A1) entlang der ersten Raumachse (X) horizontal bewegbar ist, der Halterahmen (11) durch einen zweiten Antriebsmotor (A2) um eine erste Rotationsachse (B) drehbar ist und der Innenring (12) durch einen dritten Antriebsmotor (A3) um eine zweite Rotationsachse (A) drehbar ist.

8. CNC-Maschine nach Anspruch 6 oder 7, **dadurch gekennzeichnet, dass** die zweite Antriebsvorrichtung (9) zwei Antriebsmotoren (A4, A5) aufweist, wobei die Bearbeitungsvorrichtung (4) von einem vierten Antriebsmotor (A4) entlang der zweiten Raumachse (Y) vertikal bewegbar ist und von einem fünften Antriebsmotor (A5) entlang der dritten Raumachse (Z) horizontal bewegbar ist.

9. CNC-Maschine nach wenigstens einem der vorangehenden Ansprüche, **dadurch gekennzeichnet, dass** ein Kalibrierparameter (K) die Ausrichtung von zumindest zwei Achsen, vorzugsweise zumindest zwei Raumachsen (X, Y, Z) und/oder Rotationsachse (A, B, C), zueinander ist, ein Nullpunkt (N) der Einspannvorrichtung (3) ist oder zumindest ein Referenzpunkt (R) des Prüfkörpers (5) relativ zur Einspannvorrichtung (3) ist.

10. CNC-Maschine nach wenigsten einem der vorangehenden Ansprüche, **dadurch gekennzeichnet, dass** der Prüfkörper (5) im Kalibriermodus (KM) in der Einspannvorrichtung (3) eingespannt ist.

## Claims

1. A method for operating a computerized numerical control machine (1) and for machining a dental work piece (2), wherein the computerized numerical control machine comprises a chucking device (3) for chucking the dental work piece (2) and a machining device (4) for machining the dental work piece (2), wherein the dental work piece (2) chucked in the chucking device (3) is machined by the machining device (4) of the computerized numerical control machine (1) when the computerized numerical control device (1) is operated in a machining mode (BM), wherein the computerized numerical control machine (1) comprises a housing (7), a first drive device (8), a second drive device (9), a third drive device (13) and a machining tool (14) in the form of a milling tool, a driller or a grinder, the machining tool (14) being chucked in the machining device (4), wherein the computerized numerical control machine (1) comprises a first spatial axis (X), a second spatial axis (Y) and a third spatial axis (Z), wherein the chucking device (3) is movable by the first drive device (8) relative to the housing (7) about or along at least one axis (X, A, B), the machining device (4) is movable by the second drive device (9) relative to the housing (7) about or along at least one axis (Y, Z) and the machining tool (14) chucked in the machining device (4) can be driven in a rotary manner by the third drive device (13) about a machining axis (C), **characterized in that** based on a test specimen (5) at least one calibration parameter (K) of the computerized numerical control machine (1) is verified and at least one correction value (Q) is determined when the computerized numerical control machine (1) is operated in a calibration mode (KM), wherein in the machining mode (BM) the computerized numerical control machine (1) is operated depending on the at least one correction value (Q), wherein it is verified which angle a rotary axis (A) of the chucking device (3) has compared to a plane (YZ) which is spanned by the second spatial axis (Y) and by the third spatial axis (Z), wherein the verification is carried out **in that** a verification feeler (15) is moved along the second spatial axis (Y) and based on the difference of the scanned points compared to the third spatial axis (Z) the angle of the rotary axis (A) of the chucking device (3) relative to the plane (YZ) is calculated, wherein the orientation of the rotary axis (A) of the chucking device (3) relative to the plane (YZ) forms a calibration parameter (K).

2. The method according to claim 1, **characterized in that** the orientation of at least two spatial axes (X, Y, Z) of the computerized numerical control machine (1) to each other is a calibration parameter (K).

3.  The method according to claim 1 or 2, **characterized in that** a zero point (N) of the chucking device (3) is a calibration parameter (K).

4.  The method according to one of the claims 1 to 3, **characterized in that** at least one reference point (R) of the test specimen (5) relative to the chucking device (3) is a calibration parameter (K).

5.  The method according to one of the claims 1 to 4, **characterized in that** the test specimen (5) is chucked in the chucking device (3) when the computerized numerical control machine (1) is operated in the calibration mode (KM).

6.  A computerized numerical control machine (1) for machining a dental work piece (2), wherein the computerized numerical control machine (1) comprises a first spatial axis (X), a second spatial axis (Y) and a third spatial axis (Z), comprising

    - a chucking device (3) for chucking the dental work piece (2),
    - a machining device (4) for machining the dental work piece (2),
    - a control or regulating unit (6) for controlling or regulating movements of the computerized numerical control machine (1), wherein the dental work piece (2) can be machined in a cutting manner in a machining mode (BM) of the control or regulating unit (6),
    - a housing (7),
    - a first drive device (8), wherein the chucking device (3) is movable relative to the housing (7) about or along at least one axis (X, A, B) by the first drive device (8),
    - a second drive device (9), wherein the machining device (4) is movable relative to the housing (7) about or along at least one axis (Y, Z) by the second drive device (9),
    - a machining tool (14) being chucked in the machining device (4), the machining tool (14) being in the form of a milling tool, a driller or a grinder, and
    - a third drive device (13), wherein the machining tool (14) chucked in the machining device (4) can be driven in a rotary manner by the third drive device (13) about a machining axis (C),

    **characterized in that** based on a test specimen (5) at least one calibration parameter (K) of the computerized numerical control machine (1) can be verified in a calibration mode (KM) of the control or regulating unit (6) **in that** a verification feeler (15) can be moved along the second spatial axis (Y) and based on the difference of the scanned points compared to the third spatial axis (Z) the angle of the rotary axis (A) of the chucking device (3) relative to the plane (YZ) - which is spanned by the second spatial axis (Y) and by the third spatial axis (Z) - can be calculated, wherein the orientation of the rotary axis (A) of the chucking device (3) relative to the plane (YZ) forms a calibration parameter (K), and at least one correction value (Q) can be determined, wherein in the machining mode (BM) the computerized numerical control machine (1) can be controlled or regulated by the control or regulating unit (6) depending on the at least one correction value (Q).

7.  The computerized numerical control machine (1) according to claim 6, **characterized in that** the first drive device (8) comprises three drive motors (A1, A2, A3) and the chucking device (3) comprises a, preferably c-shaped, carrier (10), a holding frame (11) rotatably supported on the carrier (10) and an inner ring (12) rotatably supported on the holding frame (11), wherein the carrier (10) is horizontally movable along the first spatial axis (X) by means of a first drive motor (A1), the holding frame (11) is rotatable about a first rotary axis (B) by means of a second drive motor (A2) and the inner ring (12) is rotatably about a second rotary axis (A) by means of a third drive motor (A3),

8.  The computerized numerical control machine (1) according to claim 6 or 7, **characterized in that** the second drive device (9) comprises two drive motors (A4, A5), wherein the machining device (4) is vertically movable along the second spatial axis (Y) by means of a fourth drive motor (A4) and is horizontally movable along the third spatial axis (Z) by means of a fifth drive motor (A5).

9.  The computerized numerical control machine (1) according to at least one of the previous claims, **characterized in that** one calibration parameter (K) is the orientation of at least two axes, preferably at least two spatial axes (X, Y, Z) and/or rotary axes (A, B, C) to each other, a zero point (N) of the chucking device (3) or at least one reference point (R) of the test specimen (5) relative to the chucking device (3).

10. The computerized numerical control machine (1) according to at least one of the previous claims, **characterized in that** in the calibration mode (KM) the test specimen (5) is chucked in the chucking device (3).

**Revendications**

1. Procédé de fonctionnement d'une machine CNC ou machine à commande numérique (1), et d'usinage d'une pièce de fabrication dentaire (2), dans lequel la machine CNC comporte un dispositif de serrage (3) permettant de serrer la pièce de fabrication dentaire (2) et un dispositif d'usinage (4) permettant d'usiner la pièce de fabrication dentaire (2), dans lequel, lors du fonctionnement de la machine CNC (1) dans un mode d'usinage (BM), la pièce de fabrication dentaire (2) serrée dans le dispositif de serrage (3) est usinée par le dispositif d'usinage (4) de la machine CNC (1), dans lequel la machine CNC comporte un boîtier (7), un premier dispositif d'entraînement (8), un deuxième dispositif d'entraînement (9), un troisième dispositif d'entraînement (13) et un outil d'usinage (14) serré dans le dispositif d'usinage (4) sous forme d'une fraise, d'un forêt ou d'une meule, dans lequel la machine CNC comporte un premier axe spatial (X), un deuxième axe spatial (Y) et un troisième axe spatial (Z) et le dispositif de serrage (3) peut être mû avec le premier dispositif d'entraînement (8) autour ou le long d'au moins un axe (X, A, B) par rapport au boîtier (7), le dispositif d'usinage (4) peut être mû avec le deuxième dispositif d'entraînement (9) autour ou le long d'au moins un axe (Y, Z) par rapport au boîtier (7) et l'outil d'usinage (14) serré dans le dispositif d'usinage (4) peut être entraîné en rotation autour d'un axe d'usinage (C) par le biais du troisième dispositif d'entraînement (13), **caractérisé en ce que**, lors du fonctionnement de la machine CNC (1) dans un mode d'étalonnage (KM), au moins un paramètre d'étalonnage (K) de la machine CNC (1) est vérifié à l'aide d'un corps d'essai (5) et au moins une valeur de correction (Q) est fixée, dans lequel, la machine CNC (1) en mode d'usinage (BM) opère en fonction de l'au moins une valeur de correction (Q), dans lequel il est vérifié à quel angle un axe de rotation (A) du dispositif de serrage (3) se trouve par rapport à un plan (YZ), lequel est défini par le deuxième axe spatial et le troisième axe spatial (Y, Z), dans lequel la vérification s'effectue, un palpeur de contrôle (15) procédant le long du deuxième axe spatial (Y) et l'angle de l'axe de rotation (A) du dispositif de serrage (3) par rapport à un plan (YZ) étant calculé par le biais de la différence des points échantillonnés par rapport au troisième axe spatial (Z), dans lequel l'orientation de l'axe de rotation (A) du dispositif de serrage (3) par rapport au plan (YZ) forme un paramètre d'étalonnage (K).

2. Procédé selon la revendication 1, **caractérisé en ce qu'**un paramètre d'étalonnage (K) est l'orientation d'au moins deux axes spatiaux (X, Y, Z) de la machine CNC l'un par rapport à l'autre.

3. Procédé selon la revendication 1 ou 2, **caractérisé en ce qu'**un paramètre d'étalonnage (K) est un point nul (N) du dispositif de serrage (3).

4. Procédé selon l'une des revendications 1 à 3, **caractérisé en ce qu'**un paramètre d'étalonnage (K) est au moins un point de référence (R) du corps d'essai (5) par rapport au dispositif de serrage (3).

5. Procédé selon l'une des revendications 1 à 4, **caractérisé en ce que**, lors du fonctionnement de la machine CNC (1) dans le mode d'étalonnage (KM), le corps d'essai (5) est serré dans le dispositif de serrage (3).

6. Machine CNC (machine à commande numérique) (1) destinée à l'usinage d'une pièce de fabrication dentaire (2), dans laquelle la machine CNC comporte un premier axe spatial (X), un deuxième axe spatial (Y) et un troisième axe spatial (Z), dotée

   - d'un dispositif de serrage (3) permettant de serrer la pièce de fabrication dentaire (2),
   - d'un dispositif d'usinage (4) permettant d'usiner la pièce de fabrication dentaire (2),
   - d'une unité de commande ou de régulation (6) permettant de commander ou de réguler les mouvements de la machine CNC (1), dans laquelle la pièce de fabrication dentaire (2) est usinable par enlèvement de copeaux dans un mode d'usinage (BM) de l'unité de commande ou de régulation (6),
   - d'un boîtier (7),
   - d'un premier dispositif d'entraînement (8), avec lequel le dispositif de serrage (3) peut être mû autour ou le long d'au moins un axe (X, A, B) par rapport au boîtier (7),
   - d'un deuxième dispositif d'entraînement (9), avec lequel le dispositif d'usinage (4) peut être mû autour ou le long d'au moins un axe (Y, Z) par rapport au boîtier (7),
   - d'un outil d'usinage (14) serré dans le dispositif d'usinage (4) sous forme d'une fraise, d'un forêt ou d'une meule et
   - d'un troisième dispositif d'entraînement (13), dans laquelle l'outil d'usinage (14) serré dans le dispositif d'usinage (4) peut être entraîné en rotation autour d'un axe d'usinage (C) par le biais du troisième dispositif d'entraînement (13),

   **caractérisée en ce que** dans un mode d'étalonnage (KM), l'unité de commande ou de régulation (6) vérifie au moins un paramètre d'étalonnage (K) de la machine CNC (1) à l'aide d'un corps d'essai (5), un palpeur de contrôle (15) pouvant procéder le long du deuxième axe spatial (Y) et l'angle de l'axe de rotation (A) du dispositif de serrage (3) par rapport à un plan (YZ), lequel est défini par le deuxième axe spatial et le troisième axe spatial (Y, Z), étant calculé par le biais de la différence des points échantillonnés par rapport au troisième axe spatial (Z), dans laquelle l'orientation de l'axe de rotation (A) du dispositif de serrage (3) par rapport au plan (YZ) forme un paramètre d'étalonnage (K), et au moins une valeur de correction (Q) peut être fixée, dans laquelle la machine CNC (1) peut, dans le mode d'usinage (BM), être commandée ou régulée par l'unité de commande ou de régulation (6) en fonction de l'au moins une valeur de correction (Q).

7. Machine CNC selon la revendication 6, **caractérisée en ce que** le premier dispositif d'entraînement (8) comporte trois moteurs d'entraînement (A1, A2, A3) et le dispositif de serrage (3) comporte un support (10), de préférence en forme de C, un châssis de maintien (11) disposé en rotation sur le support (10) et une bague intérieure (12) disposée en rotation sur le châssis de maintien (11), dans laquelle le support (10) peut être mû horizontalement le long du premier axe spatial (X) par un premier moteur d'entraînement (A1), le châssis de maintien (11) peut être mis en rotation autour d'un premier axe de rotation (B) par un deuxième moteur d'entraînement (A2) et la bague intérieure (12) peut être mise en rotation autour d'un deuxième axe de rotation (A) par un troisième moteur d'entraînement (A3).

8. Machine CNC selon la revendication 6 ou 7, **caractérisée en ce que** le deuxième dispositif d'entraînement (9) comporte deux moteurs d'entraînement (A4, A5), dans laquelle le dispositif d'usinage (4) peut être mû verticalement par un quatrième moteur d'entraînement (A4) le long du deuxième axe spatial (Y) et peut être mû horizontalement le long du troisième axe spatial (Z) par un cinquième moteur d'entraînement (A5).

9. Machine CNC selon au moins une des revendications précédentes, **caractérisée en ce qu'**un paramètre d'étalonnage (K) est l'orientation d'au moins deux axes, de préférence au moins deux axes spatiaux (X, Y, Z) et/ou axes de rotation (A, B, C) l'un par rapport à l'autre, est un point nul (N) du dispositif de serrage (3) ou au moins un point de référence (R) du corps d'essai (5) par rapport au dispositif de serrage (3).

10. Machine CNC selon au moins une des revendications précédentes, **caractérisée en ce que**, dans le mode d'étalonnage (KM), le corps d'essai (5) est serré dans le dispositif de serrage (3).

Fig 1

Fig.2

Fig.3

Fig. 4a

Fig.4b

Fig. 4c

Fig.5

5

16

U

16

X

Fig.6

Z

Y

X

Fig.7

Fig.8

MK

X

90°

80°

Y

A

10°

10°

Fig.9

MK

X

100°

90°

Y

A

Fig.10

MK

Fig.11

MK

Fig. 12

X

5

Front

Y

Back

16

IS₁₄

IS₁₀

Fig.13

Fig.14

Fig.15

Fig.16

Fig.17

Fig.18

Fig. 19

Fig. 20

*Fig.21*

X

100°

10°

16

Y

*Fig.22*

15

X

105°

49.82

15.529

16.857

5°

15

52.435

16

Y

Fig.23

Fig.24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0073028 A1
- DE 10200806927 A1
- DE 602005003012 T2
- WO 0235585 A1
- US 20170283654 A1
- US 20120213602 A1
- US 20060253220 A1
- DE 202015004771 U1